Europäisches Patentamt

European Patent Office

Office européen des brevets

(19)

(11) Publication number: **0 259 500**
A1

(12) **EUROPEAN PATENT APPLICATION**
published in accordance with Art. 158(3) EPC

(21) Application number: 87901682.2

(22) Date of filing: 14.03.87

Data of the international application taken as a basis:

(86) International application number:
PCT/JP87/00160

(87) International publication number:
WO87/05488 (24.09.87 87/21)

(51) Int. Cl.³: **A 61 C 5/00**

(30) Priority: 18.03.86 JP 58135/86
02.04.86 JP 74333/86
10.07.86 JP 160787/86
10.07.86 JP 160787/86
12.09.86 JP 139360/86
29.12.86 JP 200974/86

(43) Date of publication of application:
16.03.88 Bulletin 88/11

(84) Designated Contracting States:
AT BE CH DE FR GB IT LI LU NL SE

(71) Applicant: MIZUKAMI, Shigeru
17-10 Mukodaicho 6-chome
Tanashi-shi, Tokyo 188(JP)

(72) Inventor: MIZUKAMI, Shigeru
17-10 Mukodaicho 6-chome
Tanashi-shi, Tokyo 188(JP)

(74) Representative: Dr. Elisabeth Jung Dr. Jürgen
Schirdewahn Dipl.-Ing. Claus Gernhardt
P.O. Box 40 14 68 Clemensstrasse 30
D-8000 München 40(DE)

(54) SPOOL PIN FOR DENTAL CASTING AND METHOD FOR PREPARING PATTERN OF TOOTH PROFILE EMPLOYING SAID SPOOL PIN.

(57) Method for preparing a pattern for tooth profile which makes grinding of an inlay cast article extremely easier: including a step of forming a through-hole from the masticating surface of a plaster cast to the rear side thereof, a step of inserting a spool pin made of flexible material into said through-hole, and a step of casting material for forming tooth profile, such as wax, onto said masticating surface.

FIG. 4

0259500

SPECIFICATION

# A DENTAL CASTING SPRUE PIN AND PROCESS FOR PRODUCING TOOTHFORM PATTERN USING THE SAME SPRUE PIN

## TECHNICAL FIELD

This invention relates to a dental casting pin which can facilitate the polishing work of a cast inlay and a process for producing a toothform pattern by using the same sprue pin.

## BACKGROUND ART

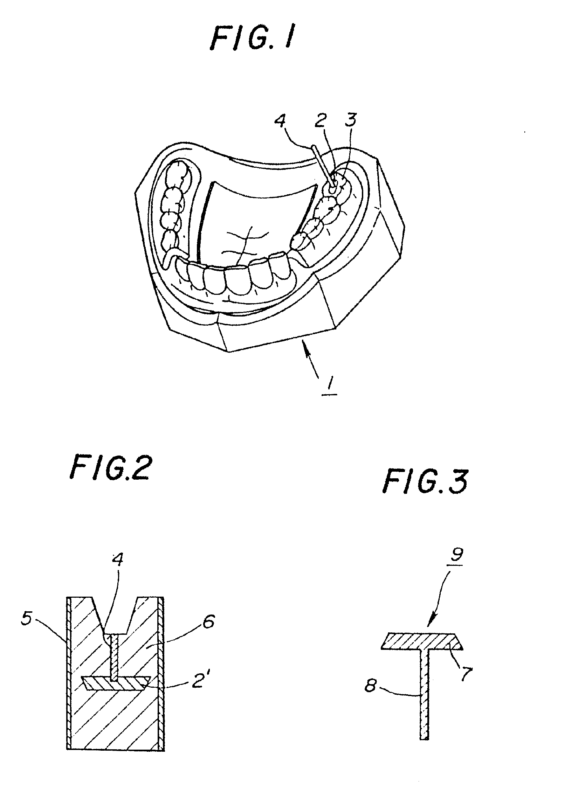

Inlays have been heretofore used to embed the portion from which a tooth is broken in a mouth with the inlay. This inlay has been produced by an indirect method for taking a toothform from a tooth in the mouth through a plaster cast. More specifically, as shown in Fig. 1, wax 2 is fed to the occlusal surface 3 of a plaster cast 1 to match the wax 2 to the toothform, a sprue pin 4 is sticked to the wax 2, the pin 4 is then pulled to remove the wax 2, the toothform pattern 2' is embedded in an investment compound 6 in a casting ring 5 as shown in Fig. 2', the ring 5 is then baked to melt the toothform pattern 2', the spool pin 4 is removed, and melted metal is fed through a gate to complete a cast inlay.

As shown in Fig. 3, in the prior art as described

- 1 -

above, the cast inlay 9 in which the gate 8 is implanted to the occlusal surface 7 is obtained. Since the gate 8 is implanted to the occlusal surface 7 of the tooth, it must be cut and smoothly polished. This work not only requires high skillfulness but is complicated to need a long time.

The inlay has been heretofore formed of metal, such as palladium or nickel. Since the palladium is expensive, the nickel has been recently frequently employed. It has been discovered that the nickel causes a patient to induce a nickel allergy, thereby disturbing the human body and becoming a problem in various foreign countries. Ceramics are, on the other hand, produced in a large quantity on the earth, less expensive and nontoxic the same as gold and the material preferably matched with the human body as well known. However, the ceramics have not heretofore been utilized as the material of the inlay. This is because, though a cast inlay 9 in which a gate 8 is implanted in the occlusal surface 7 of the tooth is obtained as shown in Fig. 3 according to the conventional process for producing the inlay, the gate must be cut and polished to form the inlay, but the ceramics cannot be polished.

A crown has been used to recover the crown shape of the tooth. The crown has been mainly produced according

- 2 -

to the following method. The shape of the tooth to be replaced is first prepared to form an abutment tooth, an impression material such as agar is placed on the abutment tooth, the impression is then removed, plaster is fed after the impression material is sufficiently solidified to form a toothform pattern. Then, a wax pattern is formed from the toothform pattern, a sprue pin is sticked to the wax pattern, the wax pattern is then removed from the toothform pattern, embedded in an investment compound, baked to finish the toothform cast, melted metal is fed fed to the cast to obtain a cast crown. The cast crown thus produced is finished by polishing, and then mounted as a prosthesis. According to this conventional technique, the cast crown must be polished by holding it by hands. Thus, the hands are heated during the polishing work to cause the polishing work to become difficult and inefficient. A machine for fixing the cast crown and polishing it is sold in the market, but it is very complicated to fix the cast crown in this machine, the machine has not so prevailed at present.

An object of this invention is to provide a process for producing a cast inlay which can eliminate the above-mentioned drawbacks and can polish the cast inlay

- 3 -

simply by anyone who is not skillful in a short time.

Another object of this invention is to provide a plaster cast used in the process for producing a cast inlay and a process for producing the same plaster cast.

Yet another object of this invention is to provide a dental casting sprue pin for use in the process for producing the cast inlay.

A further object of this invention is to provide a through-hole forming drill for use in the production of the plaster cast.

Still another object of this invention is to provide a handpiece holding machine for use in the production of the plaster cast.

Still another object of this invention is to provide a process for producing a ceramic inlay.

Still another object of the invention is to provide a process for producing a crown casting wax pattern.

Still another object of the invention is to provide a polishing retainer which can readily polish a cast crown.

DISCLOSURE OF THE INVENTION

In order to achieve the above objects, there is provided according to one aspect of this invention a process for producing a dental cast toothform pattern which comprises the steps of forming a through-hole arriving from the occlusal surface of the tooth to the

- 4 -

back surface of a plaster cast, inserting a sprue pin made of a flexible material into the through-hole, and feeding a toothform casting material, such as wax, to the occlusal surface of the tooth.

The sprue pin for use in this invention is necessarily formed of a flexible material to be softly bent and having a retaining strength. This is because, when the sprue pin is made of a metal rod as the conventional one, the wax is pressed in the direction of the through-hole when pressing it from below so that the pin cannot be removed when any side of the wax is engaged, but, when the pin is made of the flexible material, the wax can be pressed in any desired downward direction since the pin is freely bendable so that the wax can be readily removed from the occlusal surface of the tooth.

In order to achieve the above objects, there is provided according to another aspect of the invention that a head is preferably formed at the end of the sprue pin. If the head is not formed at the end of the pin, the position of the pin must be adjusted. In other words, if the position of the sprue pin is disposed excessively above, the pin disturbs the cutting of the wax to form in a predetermined shape, while if the position is excessively below, the pin is not engaged

- 5 -

with the wax so that the pin might be removed when the wax pattern is extracted.

According to yet another aspect of this invention, there is also provided a process for producing a plaster cast which comprises the steps of placing a tube having a hole on the occlusal surface of the tooth of the plaster cast, and inserting a drill from the hole of the tube to form a through-hole arriving from the occlusal surface of the tooth to the back surface of the plaster cast.

According to a further aspect of this invention, there is also provided a drill for forming a through-hole arriving from the occlusal surface of the tooth to the back surface of a plaster cast which comprises a large-diameter rod-like handpiece holder provided at a small-diameter rod-like drill element.

According to still another aspect of this invention, there is also provided a handpiece holding machine which comprises a first handpiece holder elevationally movably engaged with a post stood on a base, a second handpiece holder formed at the first handpiece holder, and a plate for placing a plaster cast to be drilled, tiltably fixed to the base opposed to a handpiece.

According to still another aspect of this invention, there is also provided a process for

- 6 -

producing a ceramic inlay which comprises the steps of embedding a toothform pattern stood with a sprue pin on the opposite side surface to the occlusal surface of the tooth in a casting ring, and then feeding castable ceramics through a gate formed by baking the casting ring.

According to still another aspect of the invention, there is also provided a process for producing a wax pattern for casting a crown which comprises the steps of forming a small hole on the upper surface of a plaster cast of an abutment tooth, engaging a rod-like element directly or through an adapter with the small hole, and then forming a wax pattern.

According to still another aspect of the invention, there is also provided a dental crown polishing holder which comprises a holder for holding a projection formed on the back surface of the dental crown, and a retainer made of a viscous material or an elastic material having plasticity interposed between the crown and the holder.

BRIEF DESCRIPTION OF THE DRAWINGS

Fig. 1 is a perspective view showing the using

- 7 -

state of a conventional sprue pin;

Fig. 2 is a sectional view for describing casting of an inlay for use with the conventional sprue pin;

Fig. 3 is a sectional view of the inlay obtained with the conventional sprue pin;

Fig. 4 is a perspective view showing the using state of a sprue pin according to this invention;

Fig. 5 is a sectional view of a toothform pattern obtained according to the process of this invention;

Fig. 6 is a sectional view for describing the casing of an inlay according to this invention;

Fig. 7 is a sectional view of the inlay obtained according to the process of this invention;

Figs. 8 and 9 are side views of a sprue pin of this invention;

Fig. 10 is a perspective view of a drill according to this invention;

Fig. 11 is a perspective view showing a process for producing a plaster cast formed with a through-hole of this invention;

Fig. 12 is a perspective view of a handpiece holding machine of this invention;

Figs. 13 and 14 are sectional views for describing a process for producing a ceramic inlay of this invention;

Fig. 15(a) is a sectional view for describing a process for producing a wax pattern of a crown according to this invention;

Figs. 15(b) is an enlarged view of Fig. 15(a);

Fig. 16 is a sectional view of a cast crown obtained according to the process of this invention;

Fig. 17 is a perspective view of a conventional polishing machine;

Fig. 18 is a plan view showing the state that a holder is fixed to a gear box;

Fig. 19 is a perspective view for describing the holding of the crown with a conventional holder;

Fig. 20 is a sectional view of the holder of this invention;

Fig. 21 is a partial sectional view for describing the fixture of the holder to a polishing machine according to this invention;

Fig. 22 is a partial sectional view showing other embodiment of the holder of this invention;

Fig. 23(a) is a sectional view showing other embodiment of the holder of this invention; and

Fig. 23(b) is a plan view of Fig. 23(a).

BEST MODE FOR CARRYING OUT THE INVENTION

Embodiments of this invention will be described in detail with reference to the accompanying drawings.

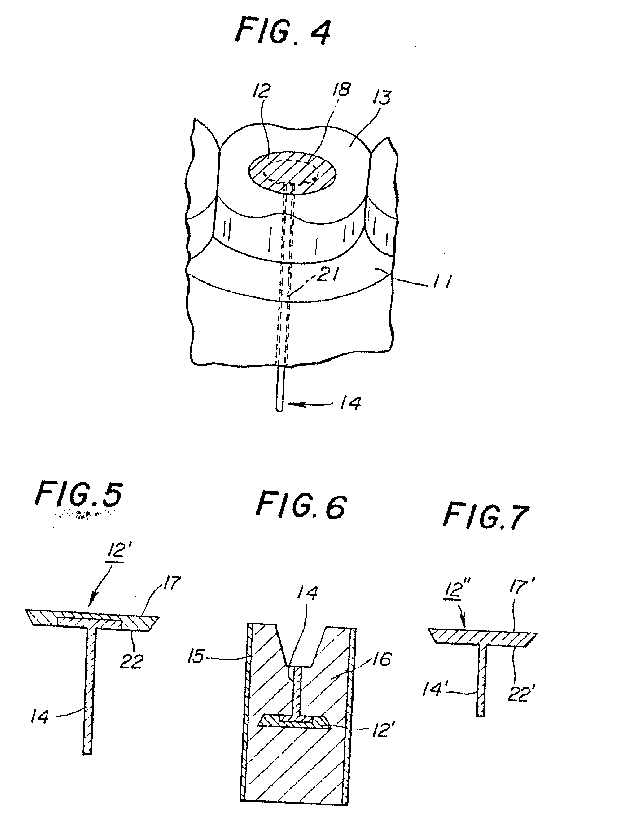

Fig. 4 is a partial perspective view of a plaster cast 11 according to this invention. A through-hole 21 arriving from an occlusal surface 13 of a tooth to the back surface of the plaster cast 11 is formed.

The plaster cast 11 itself may be produced by a conventional method having the steps of pressing an impression material, such as agar in a mouth and pouring plaster after the impression is removed.

A dental casting wax pattern (toothform pattern) is produced by the steps of inserting a sprue pin 14 made of a flexible material to the through-hole 21 of the plaster case 11, pouring wax 12 on the occlusal surface 13 of the tooth, matching the wax 12 to the toothform, and then lifting the sprue pin 13 to separate the toothform pattern 12 from the occlusal surface 13 of the tooth.

In this invention, the sprue pin 14 must be formed of a flexible material. This is because, when the sprue pin is formed of a metal rod as the conventional one, the wax is pressed in the direction of the through-hole if pressing from below so that either side of the wax is engaged, it cannot be removed. However, when the sprue pin is formed of the flexible material, the sprue pin is bendable so that the wax can be pressed in desired downward direction with the result that the wax can be readily extracted from the occlusal surface 13 of the tooth.

Thus, as shown in Fig. 5, a toothform pattern 12' in which the sprue pin 14 is implanted to the opposite surface 22 to the occlusal surface 17 of the tooth is obtained.

As shown in Fig. 6, the toothform pattern 12' embedded in an investment compound 16 in a casting ring 15, the ring 15 is baked to melt the toothform pattern 12' to bake the pin, melted metal is fed through the gate to complete the casting. Thus, as shown in Fig. 7, a cast inlay 12" in which a gate 14' is implanted in the opposite surface 22" to the occlusal surface is obtained.

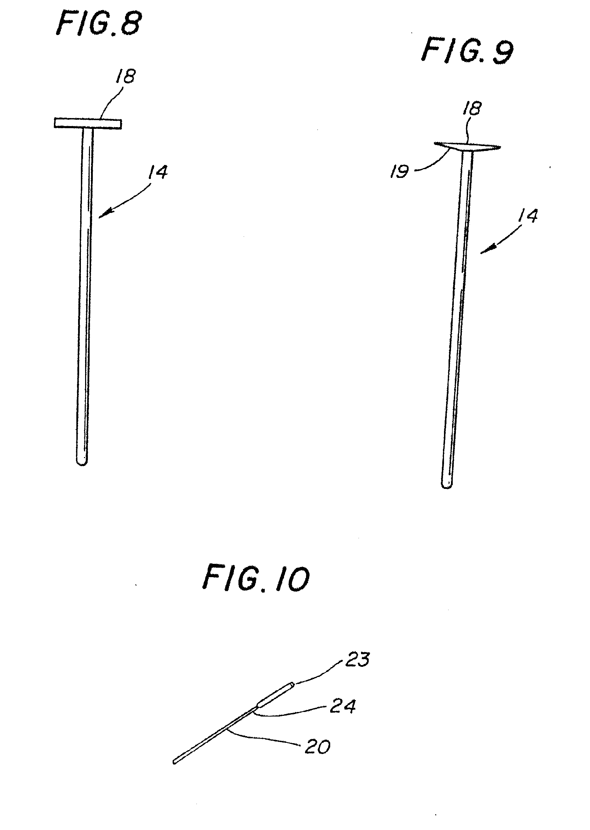

The sprue pin for use in this invention may preferably employ, as shown in Fig. 8, a head 18 formed at the end of the sprue pin 14. With the head, it is not only no need to position the sprue pin 14, but the wax is not cracked nor the sprue pin is removed since the sprue pin is enclosed with the wax.

As shown in Fig. 9, a taper 19 is formed on the lower surface of the disk-like head at the side of the pin so that a gap is formed when pressed to the occlusal surface of the tooth. Thus, since the sprue pin is not completely enclosed with the wax, it is

- 11 -

particularly preferable.

To form a through-hole in the plaster cast, as shown in Fig. 10, a drill 24 connected with a large-diameter rod-like handpiece holder 23 is preferably used for a small-diameter rod-like drill 20. The small-diameter rod-like drill 20 has a length and a size capable of forming a hole of approx. 1 mm in diameter in the plaster cast, and the large-diameter handpiece holder 23 has a thickness capable of being mounted on the handpiece.

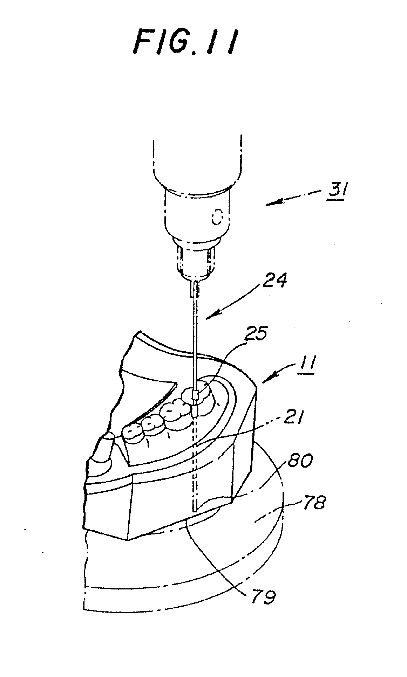

To also form a through-hole in the plaster cast, as shown in Fig. 11, the plaster cast 11 is placed on the table 78 of a balling machine, a short vinyl or rubber tube 25 is placed on the occlusal surface of the tooth of the plaster cast, and the end of the drill 34 is inserted into the hole of the tube to form the through-hole. In other words, when the through-hole is merely formed at the occlusal surface of the tooth by the drill, the wall of the through-hole might be damaged. In this case, a cast inlay in which the damaged portion is projected is formed. However, since the tube is interposed between the drill and the wall of the through-hole by foring the through-hole by inserting the drill from the hole of the tube, the wall of the through-hole is not damaged. However, this method may not always be employed, but a satisfactory through-hole may be formed with skillfulness without always the tube. The table 78 is opened at the center, and the end 80 of the drill is projected from the hole 79.

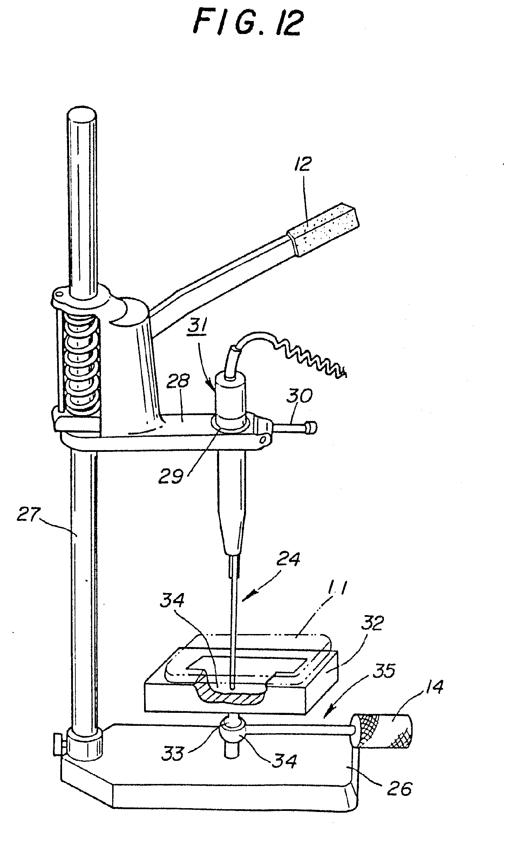

To form a through-hole in the plaster cast, a handpiece 31 attached with the drill may be held by hand, but, as shown in Fig. 12, a handpiece holding machine which has a post 27 stood on a base 26, a handpiece holder 28 elevationally movably secured to the post 27, and a handpiece holding hole 29 formed at the hand piece holder 28 is preferably used to open a linear hole in the direction of the axis of the tooth without skill. The handpiece holding hole 29 is composed to be tightened or loosened by rotating a handle 30. The handpiece holder is so formed as to move down when moving down a lever after securing it to a desired set position and to return to the set position when releasing the lever. The shape and the size of the handpiece holding hole may be, of course, selected in response to the size and the shape of the handpiece.

A plate 32 for placing the plaster cast 11 is tiltably secured to the base 25 opposed to the handpiece 31. The plate 32 is secured to the base 25 by proving a groove in which a sphere 33 formed at the end of the rod on the lower surface of the plate 32 can roll and enclosing the sphere 33 by a support 34 stood on the base 25. In Fig. 12, reference numeral 35 designates a threaded rod engaged from the side of the support 34 to contact with the sphere 33, and plate 32 can be secured at a desired angle by clamping the threaded rod. A recess 34 is formed on the plate 32 so that the drill 24 passing through the plaster cast arrives at the recess 34. It is noted that instead of forming the recess, a through-hole may be formed. In summary, the end of the drill may be projected from the back surface of the plaster cast.

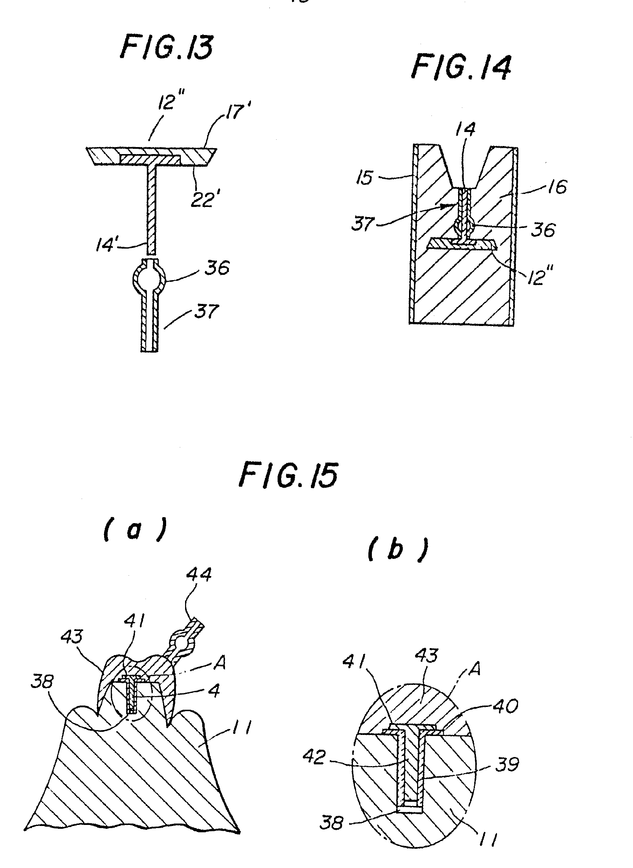

To produce the ceramic inlay by the process according to this invention, a through-hole is formed in the plaster cast in the same manner as before, the sprue pin formed with the head at the end is inserted from the upper surface of the plaster cast to the through-hole, wax is poured on the occlusal surface of the tooth, the wax is cut to form in a predetermined toothform by an ordinary method, and the sprue pin is then lifted to separate the toothform pattern from the occlusal surface of the tooth. Thus, as shown in Fig. 13, a toothform pattern 12" in which the sprue pin 14' is implanted to the opposite side surface 22' to the occlusal surface 17' of the tooth is obtained. Then, a plastic sprue pin holding cylinder 37 in which a melted material reservoir

- 14 -

36 made of a spherical expanded portion is formed at the end is engaged with the toothform pattern 12", and embedded in an investment compound 16 in the casting ring 15 as shown in Fig. 14. When the sprue pin holding cylinder is engaged in this manner, a gate of large diameter is formed. Thus, castable ceramics can be readily poured from the gate. The reservoir 36 serves to supply ceramics to supplement the shrinkage since the ceramics are shrinked when solidified, and may not always be needed. The shape of the reservoir is not particularly limited.

The portion of the sprue pin holding cylinder in contact with the back surface of the head of the sprue pin is preferably coated with a bonding agent (or an adhesive), and it is bonded with the back surface of the head of the sprue pin for use to prevent the investment compound from being mixed. The material of the sprue pin holding cylinder is preferably plastic or may be other material.

After embedded in the casting ring, the casting ring is baked to bake the toothform pattern, the sprue pin and the sprue pin holding cylinder, and the castable ceramics are fed through the gate to complete the casting. Thus, the ceramic cast inlay in which the gate is implanted to the opposite side surface to the occlusal surface of the tooth is obtained. Then, the cast inlay is baked at high temperatures to impart a gloss to the ceramic inlay. In the cast inlay thus produced, the gate is not implanted to the occlusal surface of the tooth. Therefore, the cast inlay can be used without polishing the occlusal surface of the tooth as it is.

The castable ceramics for used in this invention is ceramics capable of casting to be solidified at cooling time with fluidity at hot time, and may employ any if it has such properties.

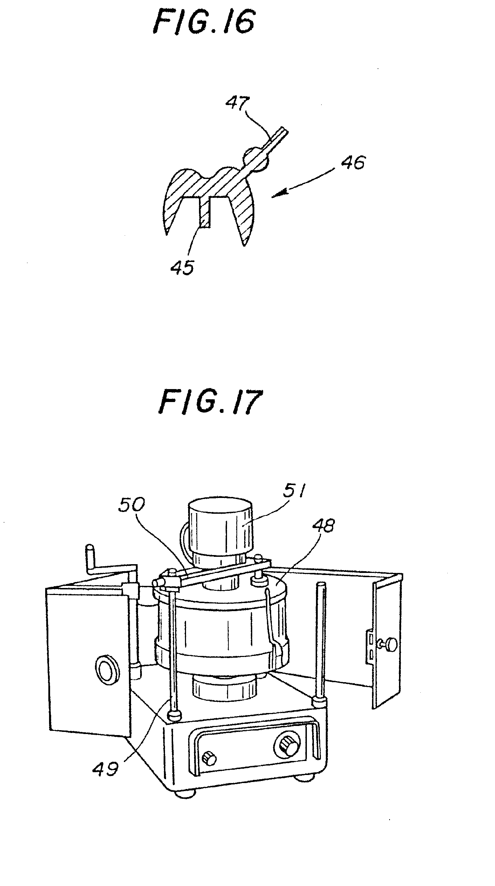

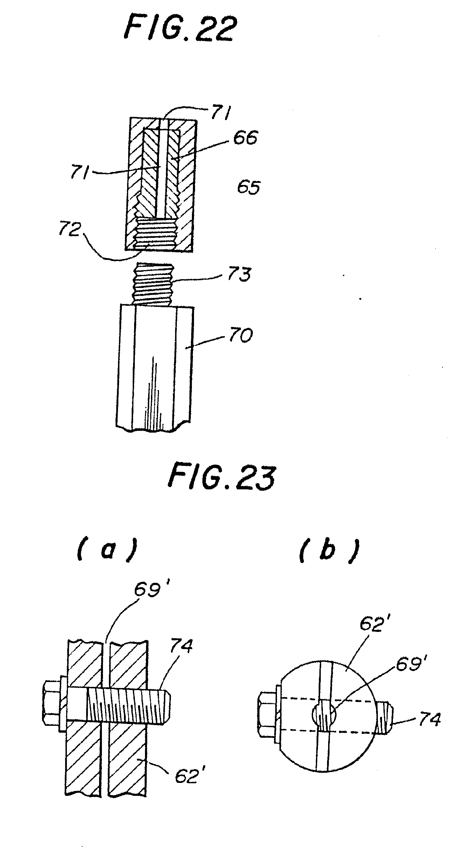

Figs. 15(a) and 15(b) are sectional views for describing the production of a wax pattern for casting a crown of a tooth. A small hole 38 is formed on the upper surface of the toothform pattern 11 having the same shape as the prosthesis duplicated with plaster. After a rod-like element 42 formed with a head 41 through an adapter 39 formed with a circular collar 40 on the upper end of the cylinder is engaged with the small hole, wax 43 is raised according to the ordinary method on the upper surface of the toothform pattern, and the outer configuration is prepared with a wax spatula. A sprue pin 44 is sticked to the wax pattern thus formed, the wax pattern and the rod-like element 41 are removed from the toothform pattern, and it is then

0259500

cast by an ordinary method with them. Then, as shown in Fig. 16, a cast crown 46 formed with a projection 45 on the lower surface is obtained. Then, the cast crown obtained with the small hole of the toothform pattern from which the adapter is removed is engaged with it to match the cast crown with the toothform pattern. Then, after the gate 47 of the cast crown is cut, the projection 45 is finished by polishing by holding it by a holder formed as shown in Figs. 22 and 23. The projection may be cut after polishing.

The small hole formed on the upper surface of the toothform pattern may be of a through-hole, but is preferable without forming the through-hole since it does not disturb a dowel pin. The rod-like element to be engaged with the small hole and the adapter may be formed of suitable material, such as plastic. In the embodiment described above, the rod-like element is engaged through the adapter with the small hole at the head. However, when the rod-like element is slightly projected from the end of the adapter, the head may not be provided.

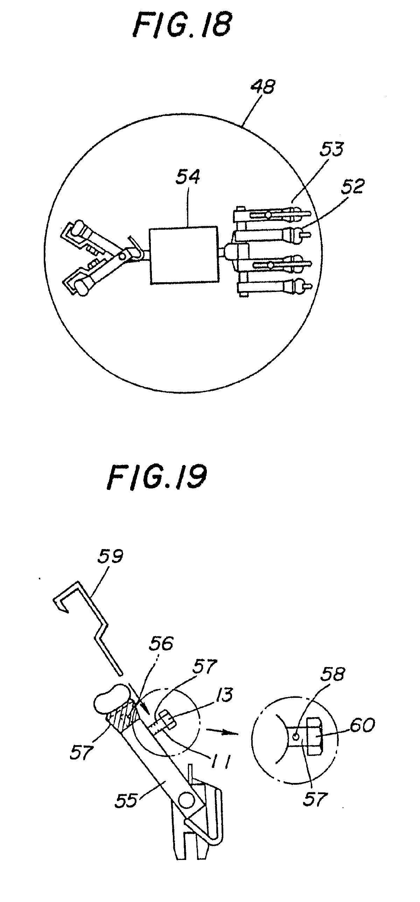

As a cast crown polishing machine, there is sold in the market a desk-top polishing machine which has, as shown in Fig. 17, a polishing tank 48 for containing polishing material, a tank cover 50 with a gear box

- 17 -

secured to a ball 49, and a gear motor 51 for rotating a holder 53 secured to the gear box 54. In this machine, as shown in Fig. 18, the crown 52 is secured to the holder 53, the holder 53 is secured to the gear box 54 mounted on on the tank 48, and the holder 53 is rotated in the polishing material to polish the crown 52. In this case, the crown is secured to the holder, as shown in Fig. 18, by inserting the pin 56 of a retainer holder 55 to the hole at the center on the back surface of a rubber retainer 57 selected in response to the shape of the crown polishing material, the material is covered on the rubber retainer 57, a hook 59 is inserted to the hole 58 of the threaded rod 57 of the retainer holder 55, the contacting position of the hook 59 and the crown polishing material is selected in response to the shape of the material, and a nut 60 is clamped. According to this method, the rubber retainer must be selected in response to the shape of the crown and the contacting position of the crown and the hook must also be selected. Thus, the operation is very complicated. In addition, the hook is readily removed during polishing, and the crown might be mixed in the polishing material. However, in this case, there is a complicated work to search the crown in the polishing material as its drawback. This drawback causes this machine not to prevail at present.

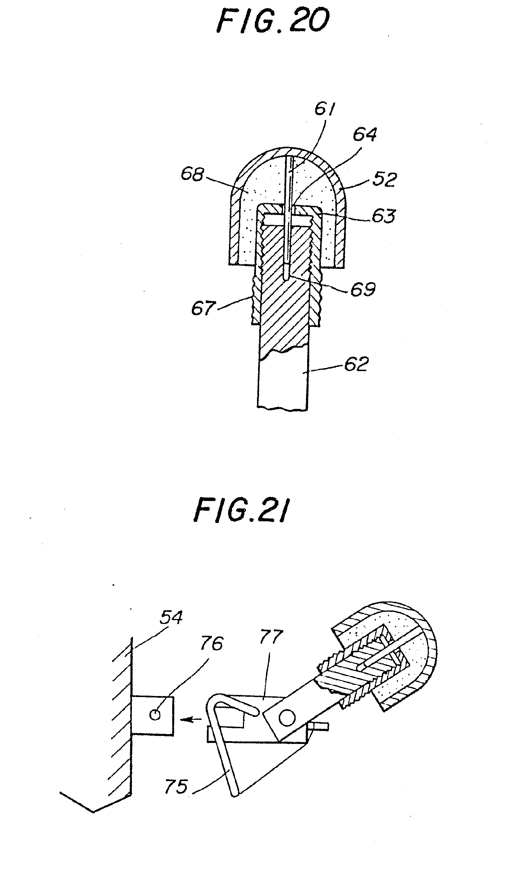

This invention provides a holder which has eliminated such drawbacks. As shown in Fig. 20, a threaded portion is formed on the outer periphery of the end of the holder 62, a female nut 63 is engaged with the threaded portion of the holder 62, the projection 61 of the crown 52 is interposed fixedly in split groove 69 of the end of the holder 52 through the small hole 64 on the upper surface of the female nut 63, the groove 69 is tightened by clamping the female nut 64 by holding the uneven portion 67 of the outer periphery of the holder 62 by hands to strongly hold the projection 81.

A retainer 68 made of viscous or elastic material is interposed between the crown 52 and the holder. This retainer 68 has a flexibility, and is selectively formed of a viscous material for forming a free shape. Thus, it is not necessary to prepare a number of types of retainers in response to the shapes of the crowns.

Fig. 22 shows an example of a holder for holding the projection. The holder has a rubber chuck 66 engaged within a projection holding cylinder 65, and a grasping cylinder 70 for compressing the rubber chuck 66 in engagement with the projection holding cylinder 65. A projection holding hole 71 is formed at the center in the rubber chuck 66 so that the bore is slightly smaller than the diameter of the projection 61. The projection holding hole 71 is opened at the end of the projection holding cylinder 65, and a threaded portion 72 is formed on the inner periphery of the hole at the end thereof. This threaded portion 72 can compress the rubber chuck 66 by engaging it with the threaded portion 73 at the end of the cylinder 70 and adjusting the strength of the force for grasping the projection 61.

Fig. 23 shows other embodiment of this invention. Split grooves 69' is clamped by engaging a screw 74 with the holder 62' to fixedly hold the projection. In summary, the holder for holding the projection may be means capable of holding rigidly the projection, and may, for example, be formed in the same manner as a mechanism of a mechanical pencil for holding the lead of a pencil.

To use the holder of this invention, as shown in Fig. 21, the crown polishing material is fixed, and mounted in a machine shown in Fig. 17 to be polished. In other words, as shown in Fig. 21, an O-ring 74 is extended by fingers to insert the rotational shaft pin 76 of the gear box 54 to between the O-ring 75 and the retainer T-shaped holder 72, the fingers are then released to interpose the pin 76 between the O-ring 75 and the retainer R-shaped holder 72 to be polished.

0259500

Alternately, it is not mounted on the machine, but may be held by hands to be polished.

INDUSTRIAL APPLICABILITY

According to this invention as described above, the cast inlay in which the gate is implanted to the opposite surface to the occlusal surface of the tooth is obtained.  Therefore, the occlusal surface of the tooth can be simply and readily polished, the inlay readily made of ceramics can be formed, and the cast crown may be readily polished.  Consequently, this invention is most adapted to produce the ceramic inlay and crown.

- 21 -

What is claimed is:

1. A process for producing a dental cast toothform pattern which comprises the steps of forming a through-hole arriving from the occlusal surface of the tooth to the back surface of a plaster cast, inserting a sprue pin made of a flexible material into the through-hole, and feeding a toothform casting material, such as wax, to the occlusal surface of the tooth.

2. A sprue pin formed of a flexible material inserted into a through-hole arriving from the occlusal surface of a tooth of a plaster cast to the back surface thereof.

3. The sprue pin according to claim 2, wherein a head is formed at the end of said sprue pin.

4. The sprue pin according to claim 3, wherein a gap is formed on the lower surface of said head when pressed on the occlusal surface of the tooth.

5. A process for producing a plaster cast which comprises the steps of placing a tube having a hole on the occlusal surface of the tooth of the plaster cast, and inserting a drill from the hole of the tube to form a through-hole arriving from the occlusal surface of the tooth to the back surface of the plaster cast.

6. A drill for forming a through-hole arriving from the occlusal surface of the tooth to the back surface of a plaster cast which comprises a large-diameter rod-like handpiece holder provided at a small-diameter rod-like drill element.

7. A handpiece holding machine which comprises a first handpiece holder elevationally movably engaged with a post stood on a base, a second handpiece holder formed at the first handpiece holder, and a plate for placing a plaster cast to be drilled, tiltably fixed to the base opposed to a handpiece.

8. A process for producing a ceramic inlay which comprises the steps of embedding a toothform pattern stood with a sprue pin on the opposite side surface to the occlusal surface of the tooth in a casting ring, and then feeding castable ceramics through a gate formed by baking the casting ring.

9. A process for producing a was pattern for casting a crown which comprises the steps of forming a small hole on the upper surface of a plaster cast of an abutment tooth, engaging a rod-like element directly or through an adapter with the small hole, and then forming a wax pattern.

10. A dental crown polishing holder which comprises a holder for holding a projection formed on the back surface of the dental crown, and a retainer made of a viscous material or an elastic material having plasticity interposed between the crown and the holder.

0259500

1/10

## FIG. 1

## FIG.2

## FIG.3

# FIG. 4

12  18  13

21

11

14

# FIG.5

12'
17
22
14

# FIG.6

14
15
16
12'

# FIG.7

12"  17'

14'  22'

FIG.8

18

14

FIG.9

18

19

14

FIG.10

23

24

20

# FIG.11

0259500

# FIG. 12

**FIG.13**

**FIG.14**

**FIG.15**

**( a )**

**( b )**

7/10

# FIG.16

# FIG.17

# FIG.18

48

53

54

52

# FIG.19

59

56

57

13

57

11

58

60

55

57

# FIG.20

# FIG.21

# FIG.22

# FIG.23

( a )   ( b )

# INTERNATIONAL SEARCH REPORT

International Application No  PCT/JP87/00160

### I. CLASSIFICATION OF SUBJECT MATTER (if several classification symbols apply, indicate all) ³

According to International Patent Classification (IPC) or to both National Classification and IPC

Int.Cl⁴  A61C5/00

### II. FIELDS SEARCHED

Minimum Documentation Searched ⁴

| Classification System · | Classification Symbols |
|---|---|
| IPC | A61C5/00, 5/04-5/10, 13/00, 13/08 |

Documentation Searched other than Minimum Documentation
to the Extent that such Documents are Included in the Fields Searched ⁵

| | |
|---|---|
| Jitsuyo Shinan Koho | 1926 - 1987 |
| Kokai Jitsuyo Shinan Koho | 1971 - 1987 |

### III. DOCUMENTS CONSIDERED TO BE RELEVANT ¹⁴

| Category * | Citation of Document, ¹⁶ with indication, where appropriate, of the relevant passages ¹⁷ | Relevant to Claim No. ¹⁸ |
|---|---|---|
| A | JP, Y1, 46-1111 (Takeda Shika Sangyo Yugen Kaisha) 14 January 1971 (14. 01. 71) Pages 1 to 2, (Family: none) | 1-5, 8-10 |
| X | JP, B2, 56-30015 (Aoki Seiki Kabushiki Kaisha) 11 July 1981 (11. 07. 81) Pages 5 to 6, (Family: none) | 6 |
| Y | JP, Y1, T14-15739 (Yoshida Kazuo) 6 June 1925 (06. 06. 25) Pages 249 to 251, (Family: none) | 7 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance· the claimed invention cannot be considered novel or cannot be considered to involve an inventive step

"Y" document of particular relevance; the claimed invention cannot be considered to involve an inventive step when the document is combined with one or more other such documents. such combination being obvious to a person skilled in the art

"&" document member of the same patent family

### IV. CERTIFICATION

| Date of the Actual Completion of the International Search ² | Date of Mailing of this International Search Report ² |
|---|---|
| May 18, 1987 (18. 05. 87) | June 1, 1987 (01. 06. 87) |
| International Searching Authority ¹ | Signature of Authorized Officer ²⁰ |
| Japanese Patent Office | |